(19) Europäisches Patentamt
European Patent Office
Office européen des brevets

(11) EP 2 505 632 A2

(12) EUROPÄISCHE PATENTANMELDUNG

(43) Veröffentlichungstag:
03.10.2012 Patentblatt 2012/40

(51) Int Cl.:
C10J 3/20 (2006.01)          C10J 3/00 (2006.01)
F01K 23/06 (2006.01)

(21) Anmeldenummer: 12001452.7

(22) Anmeldetag: 03.03.2012

(84) Benannte Vertragsstaaten:
AL AT BE BG CH CY CZ DE DK EE ES FI FR GB
GR HR HU IE IS IT LI LT LU LV MC MK MT NL NO
PL PT RO RS SE SI SK SM TR
Benannte Erstreckungsstaaten:
BA ME

(30) Priorität: 28.03.2011 DE 102011015355

(71) Anmelder: E.ON Ruhrgas AG
45131 Essen (DE)

(72) Erfinder: Adelt, Marius, Dr.
46286 Dorsten (DE)

(74) Vertreter: Harlacher, Mechthild
E.ON Ruhrgas AG
Brüsseler Platz 1
45131 Essen (DE)

(54) **Verfahren und Anlage zum Erzeugen von Brenngas und elektrischer Energie**

(57) Die Erfindung betrifft ein Verfahren und eine Anlage zum Erzeugen von Brenngas und elektrischer Energie mit folgenden Schritten
a) Erzeugen eines Produktgases in einer Biomassevergasungseinrichtung (1) aus holzartiger Biomasse,
b) Umwandeln des Produktgases in einem Methanisierungsreaktor (3) in einem exothermen Methanisierungsprozess zu einem methanhaltigen Brenngas und

c) Erzeugen eines mit Erdgas austauschbaren Gases (Bio-SNG), indem aus dem methanhaltigen Brenngas $CO_2$ entfernt wird.
Erfindungsgemäß wird
c) die Abwärme des exothermen Prozesses in dem Methanisierungsreaktor (3) in einem Gas- und Dampfturbinen-Kraftwerk (2) zur Zwischenüberhitzung von Wasserdampf genutzt, der eine Dampfturbine antreibt

Fig. 1

EP 2 505 632 A2

**Beschreibung**

Die Erfindung betrifft Verfahren zum Erzeugen von Brenngas und elektrischer Energie, umfassend die Schritte,

a) Erzeugen eines Produktgases in einer Biomassevergasungseinrichtung (1) aus holzartiger Biomasse,
b) Umwandeln des Produktgases in einem Methanisierungsreaktor (3) in einem exothermen Methanisierungsprozess zu einem methanhaltigen Brenngas und
c) Erzeugen eines mit Erdgas austauschbaren Gases (Bio-SNG), indem aus dem methanhaltigen Brenngas CO2 entfernt wird.

Die Erzeugung von Produktgas bzw. Synthesegas aus holzartiger Biomasse gilt als eine der Zukunftstechnologien der regenerativen Energieerzeugung. In der holzverarbeitenden Industrie fallen erhebliche Mengen Restholz an. Schnell wachsende Baumarten sowie bei der Pflege von Wäldern und Straßenbegleitgrün anfallende Holzabfälle bilden ebenfalls beträchtliche Holzmengen, die zur regenerativen Energieerzeugung genutzt werden können.

Es ist bekannt, holzartige Biomasse in einer Biomassevergasungseinrichtung mittels eines Oxidationsmittels in Form von Luft, Sauerstoff und/oder Wasserdampf und unter Zufuhr von Wärme in einem Oxidationsprozesses Prozesses zu einem Synthesegas bzw. Produktgas umzuwandeln, welches Wasserstoff ($H_2O$), Kohlenmonoxid (CO), Methan ($CH_4$) und Wasserdampf ($H_2O$) sowie Spuren von anderen Gasen und Verunreinigungen enthält.

Aus der Praxis ist bekannt, das Produktgas in Gasmotoren zur Strom- und Wärmeerzeugung einzusetzen. Wenn größere Mengen Holz anfallen, ist eine energetisch effiziente und wirtschaftliche Biomassenutzung mittels Gasmotoren vor Ort nicht mehr gegeben, weil die anfallende Abwärme meistens nicht genutzt werden kann.

Der Erfindung liegt demgemäß die Aufgabe zugrunde, eine energetisch effiziente und wirtschaftliche Nutzung von großen Mengen holzartiger Biomasse zu schaffen.

Die gestellte Aufgabe wird bei einem Verfahren der gattungsgemäßen Art erfindungsgemäß durch die Merkmale des Patentanspruches 1 gelöst.

Das erfindungsgemäße Verfahren zum Erzeugen von Brenngas und elektrischer Energie, umfasst die Schritte,

a) Erzeugen eines Produktgases in einer Biomassevergasungseinrichtung aus holzartiger Biomasse,
b) Umwandeln des Produktgases in einem Methanisierungsreaktor in einem exothermen Methanisierungsprozess zu einem methanhaltigen Brenngas und
c) Erzeugen eines mit Erdgas austauschbaren Gases (Bio-SNG), indem aus dem methanhaltigen Brenngas CO2 entfernt wird und ist dadurch gekennzeichnet, dass
d) die Abwärme des exothermen Prozesses in dem Methanisierungsreaktor in einem Gas- und Dampfturbinen-Kraftwerk zur Zwischenüberhitzung von Wasserdampf genutzt wird, der eine Dampfturbine antreibt.

Der Kern der Erfindung besteht darin, Produktgas bzw. Sythesegas aus holzartiger Biomasse im Wesentlichen zu Methan umzuwandeln sowie parallel in einem hocheffizienten GuD-Kraftwerk unter Nutzung der Abwärme des Methanisierungsprozesses Strom für die Einspeisung in ein Stromnetz und/oder Deckung des Eigenbedarfs zu erzeugen.

Die Methanisierung des Produktgases aus holzhaltiger Biomasse zu einem methanhaltigen Brenngas und anschließendende Aufbereitung zu einem mit Erdgas austauschbaren, in ein öffentliches Gasversorgungsnetz einspeisbares Gas (Bio Substitute Natural Gas, abgekürzt Bio-SNG) durch Entfernen von Kohlendioxid ($CO_2$) aus dem methanhaltigen Brenngas stellt ein technisch gangbares Verfahren zur optimalen Nutzung des Produktgases dar.

Vorzugsweise wird das im Schritt a) erzeugte Produktgas in einer Produktgas-Aufbereitungsanlage gereinigt.

In Rahmen der Erfindung kann ein Teilstrom des im Schritt a) erzeugten Produktgases dem Gas- und Dampfturbinen-Kraftwerk zur Wärmeerzeugung zugeführt werden.

Vorzugsweise wird im Schritt d) der Wasserdampf bei 250 °C bis 300 °C zwischenüberhitzt, wobei der Druck des Wasserdampfes der Expansionslinie in der Dampfturbine folgt.

Eine vorteilhafte Weiterbildung besteht darin, dass im Schritt d) mittels der Abwärme des Methanisierungsreaktors ein Wärmeträger erhitzt wird, der in einem Wärmeträgerkreislauf Wärme an den Wasserdampf abgibt.

Vorzugsweise wird als Wärmeträger Thermoöl verwendet,

Eine besonders vorteilhafte Weiterbildung besteht darin, das mit Erdgas austauschbare Gas (Bio SNG) in ein Gasversorgungsnetz einzuspeisen.

Die Erfindung schafft ferner Anlage zum Erzeugen von Brenngas und elektrischer Energie, mit einer Biomassevergasungseinrichtung, in der aus holzartiger Biomasse ein Produktgas erzeugt wird, mit einem Methanisierungsreaktor, in dem das Produktgas in einem exothermen Methanisierungsprozess zu einem methanhaltigen Brenngas umgewandelt wird, mit einer CO2- Abtrennanlage, in der aus dem methanhaltigen Brenngas CO2 entfernt wird, um ein mit Erdgas austauschbares Gas (Bio-SNG) zu erzeugen, mit einem Gas- und Dampfturbinen-Kraftwerk, welches eine Gasturbine und eine Dampfturbine aufweist, die mit einem Generator gekoppelt sind, wobei die Abgase aus einer Brennkammer die Gasturbine antreiben, wobei anschließend die Abgase aus der Gasturbine einem Abhitzekessel zur Erzeugung von Wasserdampf zugeführt werden und wobei die Dampfturbine von dem Wasserdampf aus dem Abhitzekessel angetrieben wird, gekennzeichnnet durch Mitteln zur Übertragung von Abwärme des Methanisierungsreaktors zur Zwischenüberhitzung des Wasserdampfes, der die Dampfturbine antreibt.

Eine Biomassevergasungseinrichtung wird mit einem nachgeschalteten Methanisierungsreaktor in Kombination mit einem Gas- und Dampfturbinen-Kraftwerk betrieben, wobei die Abwärme des Methanisierungsreaktors zur Zwischenüberhitzung von Wasserdampf, der die Dampfturbine antreibt, genutzt wird.

Gas- und Dampfturbinen-Kraftwerke, auch GuD-Kraftwerke genannt, weisen eine Gasturbine und eine Dampfturbine auf, die mit einem Stromgenerator gekoppelt sind. Die heißen Abgase aus der Brennkammer treiben die Gasturbine an und werden anschließend in dem Abhitzekessel zur Erzeugung von überhitztem Wasserdampf genutzt. Der Wasserdampf wird über einen an sich bekannten Dampfturbinenprozess in der Dampfturbine expandiert und abgekühlt. Als Brennstoff werden der Brennkammer gasförmige oder flüssige Brennstoffe wie Erdgas oder Biogas zugeführt.

Die Gasturbinen haben, abhängig von der Leistung, einen Wirkungsgrad (elektrische Leistung in Bezug auf die zugeführte Wärme) von 35 % bis 40 %. In Verbindung mit einer nachgeschalteten Dampfturbine werden dagegen bei größeren Blöcken Wirkungsgrade bis zu 60% erreicht.

Es ist an sich bekannt, den Wirkungsgrad eines Dampf-Kraftwerkes durch mehrere Druckstufen mit Zwischenüberhitzung des Wasserdampfes zu verbessern. Dazu wird der Wasserdampf in einer ersten Druckstufe der Dampfturbine von einem ersten Druck auf einen zweiten Druck entspannt, in den Abhitzekesssel zurückgeführt und auf einer weiteren Druckstufe erneut erhitzt und der Dampfturbine wieder zugeführt und in dieser entspannt.

Die Abwärme aus dem Methanisierungsreaktor wird für die Dampf-Zwischenüberhitzung genutzt, so dass der Wirkungsgrad der Dampfturbine steigt und folglich mehr Strom erzeugt wird. Die Energie der Abwärme des Methanisierungsreaktors kann unter Berücksichtigung des Wirkungsgrades des Dampfkreislaufes zu etwa 30% in Strom bzw. elektrische Energie umgewandelt werden.

Diese Lösung hat den Vorteil, dass die im Methanisierungsreaktor anfallende Abwärme in elektrische Energie umgewandelt werden kann. Bei großen Anlagen fallen erhebliche Mengen Abwärme auf dem Temperaturniveau von ca. 300 °C an. Beispielsweise fallen bei der Erzeugung von 50 MW Brenngas (Bio-SNG) 12 MW Abwärme an. Bei der Erzeugung von 200 MW fallen 50 MW Abwärme an.

Eine rationelle Wärmenutzung in dieser Größenordnung ist an den üblichen waldreichen Standorten von Bio-SNG-Anlagen nicht möglich, da in waldreichen Gebieten in der Regel keine großen industriellen Abnehmer vorhanden sind.

Die Erfindung hat den großen Vorteil, dass der Standort und die Größe der Biomassevergasungseinrichtung von der Abwärmenutzung entkoppelt werden. Im Ergebnis wird eine besonders energetisch effiziente und wirtschaftliche Biomassenutzung erreicht.

Die Biomasse-Vergasungsanlage wird als kombinierte GuD-Anlage zur Stromerzeugung und Bio-SNG-Anlage ausgeführt. Dadurch können die Kosten der Biomasse-Vergasung gesenkt und für den Holz-Vergaser und die Produktgas-Aufbereitung Konzepte aus dem Großanlagenbau genutzt werden, z. B. Flugstromvergaser.

Die Erfindung wird im Folgenden anhand eines bevorzugten Ausführungsbeispiels einer erfindungsgemäßen Anlage in Zusammenhang mit der Zeichnung näher erläutert.

Die Zeichnung zeigt in:

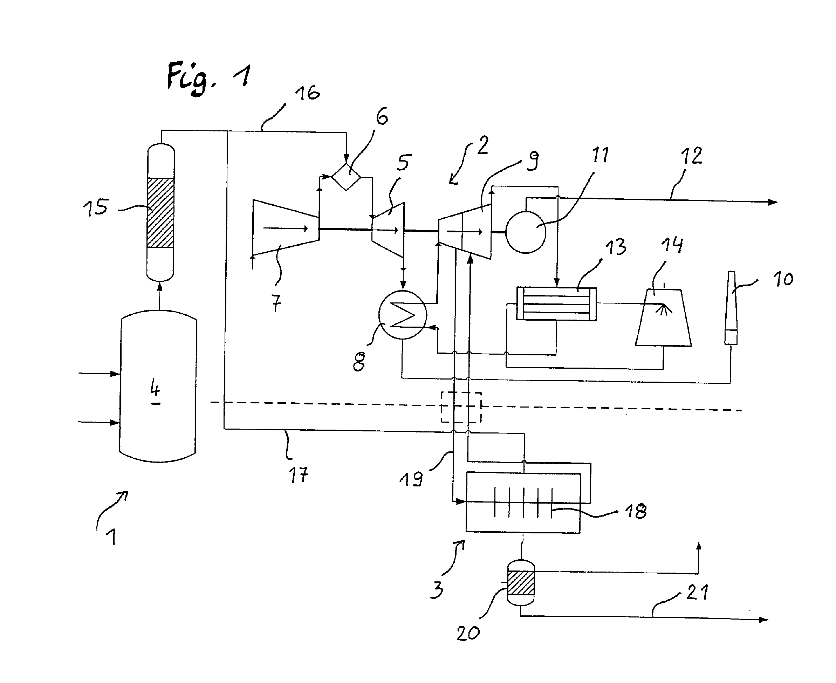

Fig. 1 zeigt ein schematisches Blockdiagramm einer Anlage zum Erzeugen von Brenngas und elektrischer Energie.

Die in Fig. 1 schematisch dargestellte Großanlage weist eine Biomassevergasungseinrichtung 1, einen Gas- und Dampfturbinen-Kraftwerk 2 und einen Methanisierungsreaktor 3 auf.

Die Biomassevergasungseinrichtung 1 weist einen Biomasse-Vergaser 4 auf, in der aus holzartiger Biomasse in einem Oxidationsprozess ein Produktgas erzeugt wird. Dem Biomasse-Vergaser 4 werden holzartige Biomasse, mindestens ein Oxidationsmittel und Wärme zugeführt.

Der Biomasse-Vergaser 4 wird als autothermer Flugstromvergaser ausgebildet. Bei der allothermen Produktgas-Erzeugung wird die erforderliche Wärme über einen Wärmeträger, beispielsweise Sand, in den Biomasse-Vergaser 4 eingebracht. Der Sand wird mit der Biomasse vermischt und später wieder abgetrennt. Bei einem allothermen Vergasungsverfahren entsteht mehr Methan als bei einem autothermen Vergasungsverfahren.

In Fig. 1 sind die wesentlichen Komponenten des Gas- und Dampfturbinen-Kraftwerkes 2 schematisch dargestellt. Eine Gasturbine 5 wird von den heißen Abgasen aus einer Brennkammer 6 antreiben. der Verbrennungsluft von einem Luftverdichter 7 zugeführt wird. Mittels der heißen Abgase aus der Gasturbine 5 wird anschließend in einem Abhitzekessel 8 überhitzter Wasserdampf erzeugt, der eine Dampfturbine 9 antreibt. Das Abgas wird anschließend über einen Kamin 10 in die Umgebung abgegeben. Die Gas-und die Dampfturbine 5, 9 sind mit einem Generator 11 gekoppelt, der elektrische Energie erzeugt, die in ein Stromversorgungsnetz 12 eingespeist werden kann. Der in der Dampfturbine 9 entspannte und abgekühlte Wasserdampf wird auf bekannte Art und Weise mittels Kondensator 13 und Kühlturm 14 kondensiert und erneut dem Abhitzekessel 8 zugeführt.

Das Produktgas aus dem Biomasse-Vergaser 4 wird einer Produktgas-Aufbereitung 15 zugeführt und gereinigt. Ein erster Teilstrom 16 des Produktgases wird der Brennkammer 6 der Gasturbine 5 zugeführt.

Ein zweiter Teilstrom 17 des gereinigten Produktgases wird einem Methanisierungsreaktor 3 zugeführt. In dem Methanisierungsreaktor 3 befindet sich ein Katalysator 18, in dem die Methanisierung des aufgereinigten Produktgases stattfindet. Der Methanisierungsprozess ist stark exotherm und verläuft entsprechend den Gleichungen:

$$CO + 3H_2 \leftrightarrow CH_4 + H_2O \quad \Delta H = -205,9 \text{ kJ/mol (298K)} \quad (1)$$

$$CO_2 + 4H_2 \leftrightarrow CH_4 + H_2O \quad \Delta H = -164,8 \text{ kJ/mol (298K)} \quad (2)$$

Unter technischen Bedingungen wird dieser Prozess bei einer konstanten Temperatur von ca. 573 K (300 °C) und einem Druck bis zu 2,5 MPa (25 bar) durchgeführt. Folglich muss aus dem Methanisierungsreaktor 3 Abwärme mit noch hoher Exergie abgeführt werden. Der Anteil dieser Abwärme liegt bei ca. 22 bis 25 % des Methanisierungsprozesses (thermisch, Heizwertbezug).

Die Abwärme aus dem Methanisierungsreaktor 3 wird für die Zwischenüberhitzung des Wasserdampfes genutzt, welcher zum Antrieb der Dampfturbine 9 des GuD-Kraftwerkes 2 dient. Der Wirkungsgrad der Dampfturbine 9 steigt, so dass mehr Strom erzeugt wird. Es kann ein sehr hoher Wirkungsgrad von mehr als 60 % erreicht werden.

Die Zwischenüberhitzung wird bei ca. 523 K bis 573 K (250°C bis 300°C) und einem Dampfdruck entsprechend der Expansionslinie in der Dampfturbine 9 durchgeführt. Der in einer ersten Stufe in der Dampfturbine 9 auf ca. 250°C abgekühlte Wasserdampf wird mittels der Abwärme des Methanisierungsreaktors 3 auf ca. 300 °C erhitzt und der Dampfturbine 9 erneut zugeführt. Der Wirkungsgrad steigt, so dass mehr elektrische Energie erzeugt wird.

Der Wasserdampf wird im Wasserdampf-Kreislauf 19 in Wärmetausch mit dem Methanisierungsreaktor 3 gebracht.

Das methanhaltige Brenngas, welches im Methanisierungsreaktor 3 entsteht, wird einer $CO_2$ -Abtrennanlage 20 zugeführt und ein mit Erdgas austauschbares Gas (Bio-SNG) erzeugt, indem aus dem methanhaltigen Brenngas Kohlendioxid ($CO_2$) entfernt wird. Das Bio-SNG kann in ein öffentliches Gasversorgungsnetz 21 eingespeist werden und somit an beliebige Orte transportiert werden und somit vielfältig genutzt und gespeichert werden. Das $CO_2$ kann genutzt werden oder in die Umgebung abgegeben werden.

Die Erfindung hat den großen Vorteil, dass der Standort des Biomasse-Vergasers und die Größe von Bio-SNG-Anlagen von der Abwärmenutzung entkoppelt werden. Im Ergebnis wird eine energetisch effiziente und wirtschaftliche Biomassenutzung erreicht.

Im Rahmen der Erfindung sind ohne weiteres Abwandlungsmöglichkeiten gegeben. So kann das im Biomasse-Vergaser 4 erzeugte Produktgas vollständig dem Methanisierungsreaktor 3 zugeführt werden. Alternativ kann es verfahrenstechnisch vorteilhaft sein, die Zwischenüberhitzung in einem besonderen Wärmetauscher mit zusätzlichem Wärmeträgerkreislauf, vorteilhafterweise Thermoöl, zu realisieren.

Bezugszeichenliste

| | |
|---|---|
| 1 | Biomassevergasungseinrichtung |
| 2 | Gas- und Dampfturbinen-Kraftwerk |
| 3 | Methanisierungsreaktor |
| 4 | Biomasse-Vergaser |
| 5 | Gasturbine |
| 6 | Brennkammer |
| 7 | Luftverdichter |
| 8 | Abhitzekesse |
| 9 | Dampfturbine |

(fortgesetzt)

| 10 | Kamin |
|----|-------|
| 11 | Generator |
| 12 | Stromversorgungsnetz |
| 13 | Kondensator |
| 14 | Kühlturm |
| 15 | Produktgas-Aufbereitung |
| 16 | Erster Teilstrom |
| 17 | zweiter Teilstrom |
| 18 | Katalysator |
| 19 | Wasserdampf-Kreislauf |
| 20 | $CO_2$ -Abtrennanlage |
| 21 | Gasversorgungsnetz |

**Patentansprüche**

1. Verfahren zum Erzeugen von Brenngas und elektrischer Energie, umfassend die Schritte,

a) Erzeugen eines Produktgases in einer Biomassevergasungseinrichtung (1) aus holzartiger Biomasse,
b) Umwandeln des Produktgases in einem Methanisierungsreaktor (3) in einem exothermen Methanisierungsprozess zu einem methanhaltigen Brenngas und
c) Erzeugen eines mit Erdgas austauschbaren Gases (Bio-SNG), indem aus dem methanhaltigen Brenngas $CO_2$ entfernt wird,
**dadurch gekennzeichnet, dass**
d) die Abwärme des exothermen Prozesses in dem Methanisierungsreaktor (3) in einem Gas- und Dampfturbinen-Kraftwerk (2) zur Zwischenüberhitzung von Wasserdampf genutzt wird, der eine Dampfturbine antreibt.

2. Verfahren nach Anspruch 1,
**dadurch gekennzeichnet,**
**dass** das im Schritt a) erzeugte Produktgas in einer Produktgas-Aufbereitungsanlage (15) gereinigt wird.

3. Verfahren nach Anspruch 1 oder 2,
**dadurch gekennzeichnet,**
**dass** ein erster Teilstrom (16) des im Schritt a) erzeugten Produktgases dem Gas- und Dampfturbinen-Kraftwerk (2) zur Wärmeerzeugung zugeführt wird.

4. Verfahren nach einem der Ansprüche 1 bis 3,
**dadurch gekennzeichnet,**
**dass** im Schritt d) der Wasserdampf bei 250 °C bis 300 °C zwischenüberhitzt wird, wobei der Druck des Wasserdampfes der Expansionslinie in der Dampfturbine (9) folgt.

5. Verfahren nach einem der Anspruch 1 bis 4,
**dadurch gekennzeichnet,**
**dass** im Schritt d) mittels der Abwärme des Methanisierungsreaktors (3) ein Wärmeträger erhitzt wird, der in einem Wärmeträgerkreislauf Wärme an den Wasserdampf abgibt.

6. Verfahren nach Anspruch 5,
**dadurch gekennzeichnet,**
**dass** als Wärmeträger Thermoöl verwendet wird.

7. Verfahren nach einem der Ansprüche 1 bis 6,

**dadurch gekennzeichnet,**
**dass** das mit Erdgas austauschbare Gas (Bio SNG) in ein Gasversorgungsnetz (21) eingespeist wird.

8. Anlage zum Erzeugen von Brenngas und elektrischer Energie,
mit einer Biomassevergasungseinrichtung (1), in der aus holzartiger Biomasse ein Produktgas erzeugt wird,
mit einem Methanisierungsreaktor (3), in dem das Produktgas in einem exothermen Methanisierungsprozess zu einem methanhaltigen Brenngas umgewandelt wird,
mit einer $CO_2$- Abtrennanlage (20), in der aus dem methanhaltigen Brenngas $CO_2$ entfernt wird, um ein mit Erdgas austauschbares Gas (Bio-SNG) zu erzeugen,
mit einem Gas- und Dampfturbinen-Kraftwerk (2), welches eine Gasturbine (5) und eine Dampfturbine (9) aufweist, die mit einem Generator (11) gekoppelt sind,
wobei die Abgase aus einer Brennkammer (6) die Gasturbine (5) antreiben, wobei anschließend die Abgase aus der Gasturbine (5) einem Abhitzekessel (8) zur Erzeugung von Wasserdampf zugeführt werden und wobei die Dampfturbine (9) von dem Wasserdampf aus dem Abhitzekessel (8) angetrieben wird, **gekennzeichnet durch**
Mitteln zur Übertragung von Abwärme des Methanisierungsreaktors (3) zur Zwischenüberhitzung des Wasserdampfes, der die Dampfturbine (9) antreibt.

9. Anlage nach Anspruch 8,
**dadurch gekennzeichnet,**
**dass** die Biomassevergasungseinrichtung (1) einen Biomasse-Vergaser (4) mit Mitteln zum Zuführen einer holzartiger Biomasse, eines Oxidationsmittel und von Wärme zum Erzeugen von Produktgas in einem allothermen Prozess aufweist.

10. Anlage nach Anspruch 8 oder 9,
**dadurch gekennzeichnet,**
**dass** der Biomasse-Vergaser (4) als autothermer Flugstromvergaser ausgebildet ist.

11. Anlage nach einem der Anspruch 8 bis 10,
**dadurch gekennzeichnet,**
**dass** dem Biomasse-Vergaser (4) eine Produktgas-Aufbereitungsanlage (15) nachgeschaltet ist.

Fig. 1

EP 2 505 632 A2